# EUROPÄISCHE PATENTSCHRIFT

(11) **EP 2 460 684 B1**
(45) Veröffentlichungstag und Bekanntmachung des Hinweises auf die Patenterteilung: **11.09.2013**
(21) Anmeldenummer: 11186717.2
(22) Anmeldetag: 26.10.2011
(51) Int. Cl.: B60N 2/14

(54) **Drehbarer Sitz**
Swivel seat
Siège pivotant

(30) Priorität: 02.12.2010 DE 102010053802
(43) Veröffentlichungstag der Anmeldung: 06.06.2012
(73) Patentinhaber: KEIPER GmbH & Co. KG, 67657 Kaiserslautern (DE)
(72) Erfinder: Adam, Jörg, 55758 Oberreidenbach (DE); Vogt, Adolf, 67821 Alsenz (DE); Armbrust, Karl-Peter, 67715 Geiselberg (DE)
(74) Vertreter: Wilhelm, Wolfgang

(56) Entgegenhaltungen:
- EP-A2- 1 772 306
- DE-A1- 19 514 755
- DE-A1-102007 006 902
- JP-A- 10 100 755
- JP-U- H01 158 242
- US-A- 3 572 817

## Beschreibung

Die Erfindung bezieht sich auf einen Fahrzeugsitz mit einem Sitzteil, mit einer Drehvorrichtung, die ein am Boden der Fahrgastzelle direkt oder indirekt befestigbares Basisbauteil mit einer sich vertikal zur Ebene des Bodens nach oben erstreckenden Schwenkachse aufweist, auf der ein das Sitzteil direkt oder indirekt tragender Sitzteilträger aus einer in Fahrtrichtung gerichteten Grundposition in eine oder mehrere Schwenkpositionen schwenkbar angeordnet ist, mit einer Verriegelungseinrichtung zum Arretieren des Sitzteilträgers in einer oder mehreren der Schwenkpositionen, mit einem oder mehreren Fangelementen, die an dem Basisbauteil oder dem Sitzteilträger fest angeordnet sind und in der Grundposition des Sitzteilträgers ein in Richtung der Schwenkachse Voneinanderwegbewegen von Basisbauteil und Sitzteilträger verhindernd angreifen.

Insbesondere in Nutzfahrzeugen besteht häufig das Erfordernis, dass der Fahrzeugsitz, insbesondere der Beifahrersitz bei Beibehalten einer Festverbindung mit der Fahrgastzelle um eine senkrecht zur Fahrtrichtung sich erstreckende Schwenkachse geschwenkt werden kann.

Dadurch wird der Zugang zu verschiedenen Funktionsraumbereichen oder Funktionselementen erleichtert, die verteilt um den Fahrzeugsitz angeordnet sind.

Dies trifft im Besonderen zu, wenn Bereiche erreichbar sein sollen, die im rückwärtigen Bereich der Fahrgastzelle liegen.

Dazu ist ein Fahrzeugsitz der obengenannten Art bekannt, dessen bewegliche Bauteile und mit den beweglichen Bauteilen in Kontakt kommende fest stehende Bauteile aus Metall bestehen.

Da toleranzbedingt zwischen diesen Bauteilen Spiel vorhanden sein muss, kommt es während des Fahrbetriebs und den dabei erzeugten Erschütterungen des Fahrzeugs zu einem Aneinanderschlagen dieser Bauteile und somit zu störenden Geräuschen.

Aus der DE 10 2007 006 902 A1, welche auch den Merkmalen des Oberbegriffs von Anspruch 1 entspricht, ist eine Drehkonsole für einen Fahrzeugsitz bekannt, mittels welcher der Fahrzeugsitz von einer Fahrstellung in eine Pausenstellung verdrehbar ist, wobei ein Überbau und ein Unterbau der Drehkonsole mittels einer Rasteinrichtung miteinander verrastbar sind.

Auch die Druckschriften JP H01 158 242 U, US 3,572,817, EP 1 772 306 A2 und JP 10 100 755 A zeigen jeweils eine Drehkonsole für einen Fahrzeugsitz mit einer Rasteinrichtung.

Aus der DE 195 14 755 A1 ist eine Befestigungseinrichtung für einen Sitz am Boden eines Fahrzeugs mit bodenfesten pilzähnlichen Bolzen und diesen zugeordneten sitzfesten Platten bekannt, von denen jede im Einbauzustand mit Randbereichen einer Ausnehmung den Schaft des zugehörigen Bolzens umgreift.

Aufgabe der Erfindung ist es daher einen Fahrzeugsitz der eingangs genannten Art zu schaffen, der auf einfache und kostengünstige Weise bei geringem Bauraumbedarf derartige Geräusche weitgehend vermeidet.

Diese Aufgabe wird erfindungsgemäß dadurch gelöst, dass die Fangelemente in der Grundposition des Sitzteilträgers über elastische Zwischenelemente an dem Sitzteilträger formschlüssig angreifen, und dass die Fangelemente Fangbolzen sind, die mit ihrem einen Ende am Basisbauteil befestigt sind und an ihrem anderen zum Sitzteilträger gerichteten Ende eine radiale Verbreiterung aufweisen, mit der der Sitzteilträger umgreifbar ist, und dass die elastischen Zwischenelemente an einem oder mehreren in der Grundposition des Sitzteilträgers mit dem Sitzteilträger in Berührung stehenden Bereichen der Fangelemente angeordnet sind, und dass die elastischen Zwischenelemente die Fangbolzen umschließende elastische Hülsen sind, und dass die elastischen Hülsen an ihren beiden Enden flanschartige Erweiterungen aufweisen, zwischen denen eine Ringnut gebildet ist, in die in der Grundposition des Sitzteilträgers der Sitzteilträger mit seinem umlaufenden Randbereich hineinragt.

Durch diese Ausbildung wird das Spiel zwischen den mit dem Basisbauteil verbundenen feststehenden Bauteilen und den mit dem Sitzteilträger verbundenen beweglichen Bauteilen eliminiert und ein Aneinanderschlagen von metallischen Bauteilen vermieden. Weiterhin wird die Eigenfrequenz des Fahrzeugsitzes erhöht, wodurch der Abstand der Eigenfrequenz von üblicherweise auftretenden niederfrequenten Anregungen vergrößert wird.

Weiterhin ist die Montage besonders einfach und die sich ergebende formschlüssige Verbindung der elastischen Zwischenelemente mit den Fangbolzen erfordert keine Befestigungselemente für die Zwischenelemente und es werden sowohl quer zur Längserstreckung als auch in Längserstreckung der Fangbolzen gerichtete Relativbewegungen zwischen dem Basisbauteil und dem Sitzteilträger federnd abgefangen.

Dazu ist weitestgehend kein zusätzlicher Bauraumbedarf erforderlich.

Um in einem Crashfall des Fahrzeugs ein Auseinanderreißen von Basisbauteil und Sitzteilträger zu vermeiden, kann der Sitzteilträger plattenartig ausgebildet sein und in der Grundposition des Sitzteilträgers können die an dem Basisbauteil fest angeordneten Fangelemente am umlaufenden Rand den Sitzteilträger auf seiner dem Basisbauteil abgewandten Seite umgreifen, wobei die Fangelemente durch Schwenken des Sitzteilträgers aus seiner Grundposition außer Eingriff von dem Sitzteilträger bringbar sind.

Im Crashfall halten die Fangelemente das Basisbauteil so, dass eine Trennung des Sitzteilträgers von dem Basisbauteil verhindert wird.

Die gleiche Wirkung wird erreicht, wenn der Sitzteilträger plattenartig ausgebildet ist und ein oder mehrere an seinem umlaufenden Rand nach außen mündende Ausnehmungen aufweist, in die in der Grundposition des Sitzteilträgers die an dem Basisbauteil fest angeordneten Fangelemente ragen und den Sitzteilträger an seiner dem Basisbauteil abgewandten Seite umgreifen, wobei die Fangelemente durch Schwenken des Sitzteilträgers aus seiner Grundposition außer Eingriff von den Ausnehmungen des Sitzteilträgers bringbar sind.

Dabei sind die Fangelemente in der Grundposition des Sitzteilträgers an einer Seitenwand oder dem Boden der Ausnehmungen in Anlage und definieren so diese Grundposition des Sitzteilträgers.

Ein Auseinanderreißen von Basisbauteil und Sitzteilträger bei dem meist in seiner Grundposition befindlichen Sitzteilträger wird im Crashfall dadurch vermieden, dass die Fangelemente an dem der Fahrtrichtung entgegengesetzten Bereich des in seiner Grundposition befindlichen Sitzteilträgers angreifen.

Zusätzlich zu den an den Fangbolzen angeordneten elastischen Zwischenelementen können die elastischen Zwischenelemente an einem oder mehreren in der Grundposition des Sitzteilträgers mit den Fangelementen in Berührung stehenden Bereichen des Sitzteilträgers angeordnet sein.

Vorzugsweise bestehen die elastischen Zwischenelemente aus einem Elastomer.

Sind Basisbauteil und Sitzteilträger in einem Abstand zueinander angeordnet und an dem Basisbauteil oder dem Sitzteilträger über seine Erstreckung verteilt Abstandshalter angeordnet, die den Abstand zwischen Basisbauteil und Sitzteilträger überbrücken, wird dadurch ein Kippen des Sitzteilträgers relativ zum Basisbauteil vermieden.

Um eine Reibung zwischen Basisbauteil oder Sitzteilträger und dem Abstandshaltern weitgehend zu vermeiden, können die Abstandshalter eine Oberfläche geringen Reibungswiderstands aufweisen.

In einfacher Ausbildung kann das Basisbauteil plattenartig ausgebildet sein, wobei zur einfachen Montierbarkeit das plattenartige Basisbauteil mit einem mit dem Boden der Fahrgastzelle verbundenen podestartigen Trägerteil verschraubbar ist.

Dabei kann das podestartige Trägerteil Gewindebohrungen aufweisen, in die durch entsprechend im Basisbauteil ausgebildete Anschraubbohrungen hindurchgeführte Schrauben einschraubbar sind.

Sind dabei die dem podestartigen Trägerteil abgewandten Mündungen der Anschraubbohrungen mit zylindrischen Senkungen versehen und die Schrauben Linsenkopfschrauben, so ist dadurch bei der Verschraubung des Basisbauteils auf dem Trägerteil ein Toleranzausgleich der Positionierung des Basisbauteils möglich.

Sind an dem Basisbauteil unsymmetrisch zur Schwenkachse und zum podestartigen Trägerteil hervorstehende Positionierungsansätze angeordnet, die in entsprechende am podestartigen Trägerteil ausgebildete Positionierungsausnehmungen einführbar sind, so wird nicht nur eine einfache sondern auch eine falsche Anordnung verhindernde Vorpositionierung des Basisbauteils bei seiner Montage erreicht.

Um das Sitzteil auch relativ zum Basisbauteil verschieben zu können, können auf dem Sitzteilträger Sitzschienen des Sitzteils befestigbar sein.

Zum Verriegeln des Sitzteilträgers in einer oder mehreren Schwenkpositionen kann die Verriegelungseinrichtung einen zweiarmigen Verriegelungshebel aufweisen, der um eine zur Schwenkachse parallele Verriegelungsachse schwenkbar am Sitzteilträger gelagert ist, wobei ein erster Arm des Verriegelungshebels einen Vorsprung aufweist, der durch eine vorgespannte Federkraft in eine Ausnehmung am radial umlaufenden Rand einer kreisförmigen Verriegelungsscheibe kraft- und/oder formschlüssig eingreifend belastet ist, die koaxial zur Schwenkachse mit dem Basisbauteil verbunden ist.

Vorzugsweise ist dabei die Ausnehmung eine ganz oder teilweise radial umlaufende Nut.

Durch manuelle Betätigung des zweiten Arms des Verriegelungshebels kann der Vorsprung aus der Ausnehmung herausbewegt und die Schwenkposition des Sitzteilträgers verändert werden.

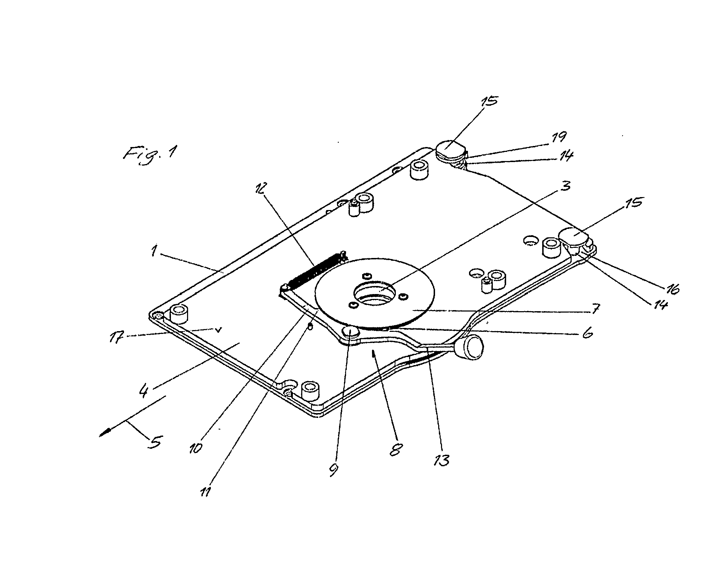

Ein Ausführungsbeispiel der Erfindung ist in Zeichnung dargestellt und wird im folgenden näher beschrieben. Es zeigen
- Figur 1: eine perspektivische Ansicht einer Drehvorrichtung eines Fahrzeugsitzes

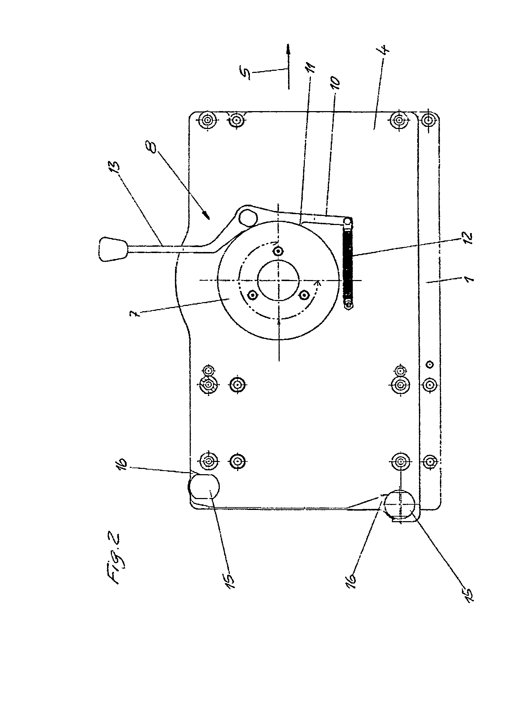

- Figur 2: eine Draufsicht der Drehvorrichtung nach Figur 1

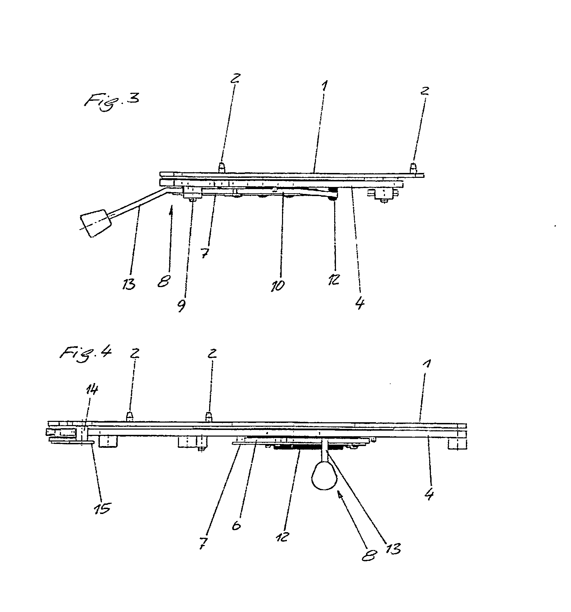

- Figur 3: eine Seitenansicht der Drehvorrichtung nach Figur 1
- Figur 4: eine weitere Seitenansicht der Drehvorrichtung nach Figur 1

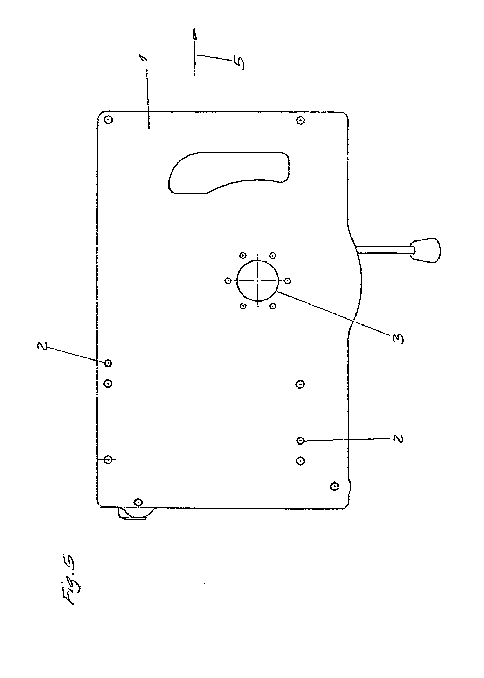

- Figur 5: eine Untenansicht der Drehvorrichtung nach Figur 1
- Figur 6: einen vergrößerten Ausschnitt im Bereich eines Fangbolzens der Drehvorrichtung nach Figur 1 im Schnitt.

Die dargestellte Drehvorrichtung weist ein rechteckförmiges plattenartiges Basisbauteil 1, welches das zwei an seiner Unterseite hervorstehende Positionierungsansätze 2 aufweist.

Das Basisbauteil 1 ist auf ein nicht dargestelltes podestartiges Trägerbauteil aufsetzbar, wobei die Positionierungsansätze 2 in entsprechende Positionierungsausnehmungen des Trägerbauteils eingreifen.

Das Trägerbauteil ist am Boden einer Fahrgastzelle eines Nutzfahrzeugs im Bereich des Beifahrers befestigt.

Mittels Schrauben ist das Basisbauteil 1 auf das Trägerbauteil aufschraubbar.

Auf dem Basisbauteil 1 ist an dessen Oberseite nach oben hervorstehend eine rohrartige Schwenkachse 3 fest angeordnet.

Ein ebenfalls rechteckförmiger plattenartiger Sitzteilträger 4 annähernd gleicher Größe und Form wie das Basisbauteil 1 weist eine Schwenkbohrung gleichen Durchmessers wie die Schwenkachse 3 auf, mit der der Sitzteilträger 4 schwenkbar auf die Schwenkachse 3 aufgesetzt ist.

In Fahrtrichtung 5 des die Drehvorrichtung aufweisenden Nutzfahrzeugs gesehen ist die Anordnung von Schwenkachse 3 und Schwenkbohrung außer der Mitte von Basisbauteil 1 und Sitzteilträger 4 zur Fahrzeugtunnelseite hin versetzt, so dass bei einem Schwenken des Sitzteils 4 der erforderliche Schwenkraum auf der Beifahrertürseite des Fahrzeugsitzes verringert ist.

Oberhalb des Sitzteilträgers 4 ist eine Verriegelungsscheibe 6 fest an der Schwenkachse 3 angeordnet, die von einer der Verriegelungsscheibe 6 entsprechenden Abdeckscheibe 7 zur Verhinderung des Eindringens von Schmutz abgedeckt ist.

Auf dem Sitzteilträger 4 ist ein zweiarmiger Verriegelungshebel 8 um eine radial außerhalb der Verriegelungsscheibe 6 parallel zur Schwenkachse 3 angeordnete Verriegelungsachse 9 in der Ebene der Verriegelungsscheibe 6 schwenkbar gelagert.

An der der Verriegelungsscheibe 6 zugewandten Seite des ersten Arms 10 des Verriegelungshebels 8 ist ein Vorsprung 11 angeordnet, der durch eine am freien Ende des ersten Arms 10 angreifende vorgespannte Zugfeder 12 in eine Nut der Verriegelungsscheibe 6 kraft- und formschlüssig eingreifend belastet ist und bei Eingriff in die Nut den Sitzteilträger 4 in seiner momentanen Schwenkposition verriegelt.

Durch manuelle Beaufschlagung des freien Endes des zweiten Arms 13 des Verriegelungshebel 8 entgegen der Kraft der Zugfeder 12 wird der Vorsprung 11 aus der Nut herausbewegt und die Verriegelung des Sitzteilträgers 4 aufgehoben.

Nicht dargestellt ist, dass auf dem Sitzteilträger 4 in Fahrrichtung 5 gerichtete Sitzschienen angeordnet sind, auf denen ein Sitzteil eines Beifahrers verschiebbar und in unterschiedlichen Position blockierbar angeordnet ist.

Im in Fahrtrichtung 5 hinteren Endbereich sind in den beiden Ecken des Basisbauteils 1 Fangbolzen 14 fest angeordnet, die über die Ebene des Sitzteilträgers 4 hinausragen und an ihrem über die Ebene des Sitzteilträgers 4 hinausragenden Ende eine radiale Verbreiterung 15 aufweisen.

Der Sitzteilträger 4 weist an seinem bei in Grundposition in Fahrtrichtung 5 ausgerichteter Lage hinteren Endbereich zwei an seinem umlaufenden Rand nach außen mündende Ausnehmungen 16 auf.

In dieser Grundposition ragen die Fangbolzen 14 parallel zur Schwenkachse 3 durch die Ausnehmungen 16 und die radialen Verbreiterungen 15 über die Oberseite 17 des Sitzteilträgers 4.

Wird der Sitzteilträger 4 nach seiner Entriegelung entgegen dem Uhrzeigersinn verschwenkt, geraten die Fangbolzen 14 aus den Ausnehmungen 16 heraus und die Verbreiterungen 15 ragen nicht mehr über die Oberseite 17 des Sitzteilträgers 4.

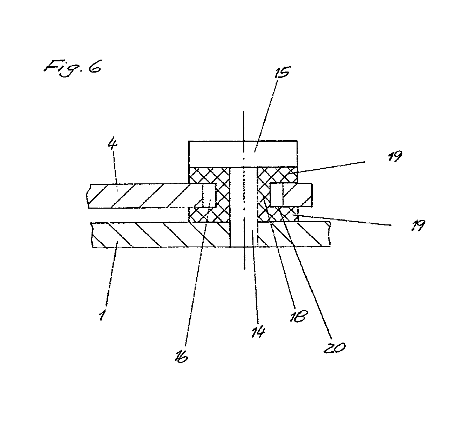

Wie in Figur 6 zu sehen ist, sind die Fangbolzen 14 von je einer aus Elastomer bestehenden Hülse 18 umschlossen, die an ihren beiden Enden flanschartige Erweiterungen 19 aufweisen, zwischen denen eine Ringnut 20 gebildet ist.

In der Grundposition ragt der plattenartige Sitzteilträger 4 mit dem umlaufenden Rand der Ausnehmungen 16 in diese Ringnut 20 hinein.

Somit kann der Sitzteilträger 4 in seiner Grundposition weder direkt an dem Fangbolzen 14 noch direkt an der Verbreiterungen 15 oder dem Basisbauteil 1 zur Anlage kommen, sondern wird elastisch in der Ringnut 20 gehalten.

Damit wird das Entstehen von störenden Geräuschen durch Anschlagen des Sitzteilträgers 4 an den Fangbolzen 14, den Verbreiterungen 15 und dem Basisbauteil 1 vermieden.

Gleichzeitig ist in der Grundposition der Sitzteilträger 4 gegen ein Auseinanderreißen an seinem in Fahrtrichtung 5 hinteren Bereich von dem Basisbauteil 1 gesichert.

Dies könnte im Fall eines frontalen Crashs des Fahrzeugs eintreten und ein für den Beifahrer gefährliches Trennen des Sitzteilträgers 4 von dem Basisbauteil 1 bewirken.

### Bezugszeichenliste

- 1: Basisbauteil
- 2: Positionierungsansätze
- 3: Schwenkachse
- 4: Sitzteilträger
- 5: Fahrtrichtung
- 6: Verriegelungsscheibe
- 7: Abdeckscheibe
- 8: Verriegelungshebel
- 9: Verriegelungsachse
- 10: erster Arm
- 11: Vorsprung
- 12: Zugfeder
- 13: zweiter Arm
- 14: Fangbolzen
- 15: Verbreiterung
- 16: Ausnehmungen
- 17: Oberseite
- 18: Hülse
- 19: Erweiterung
- 20: Ringnut

## Patentansprüche

1. Fahrzeugsitz mit einem Sitzteil, mit einer Drehvorrichtung, die ein am Boden einer Fahrgastzelle direkt oder indirekt befestigbares Basisbauteil (1) mit einer sich vertikal zur Ebene des Bodens nach oben erstreckenden Schwenkachse (3) aufweist, auf der ein das Sitzteil direkt oder indirekt tragender Sitzteilträger (4) aus einer in Fahrtrichtung (5) gerichteten Grundposition in eine oder mehrere Schwenkpositionen schwenkbar angeordnet ist, mit einer Verriegelungseinrichtung zum Arretieren des Sitzteilträgers (4) in einer oder mehreren der Schwenkpositionen, mit einem oder mehreren Fangelementen, die an dem Basisbauteil (1) fest angeordnet sind und in der Grundposition des Sitzteilträgers (4) ein in Richtung der Schwenkachse (3) Voneinanderwegbewegen von Basisbauteil (1) und Sitzteilträger (4) verhindernd angreifen, **dadurch gekennzeichnet, dass** die Fangelemente in der Grundposition des Sitzteilträgers (4) über elastische Zwischenelemente an dem Sitzteilträger (4) formschlüssig angreifen, und dass die Fangelemente Fangbolzen (14) sind, die mit ihrem einen Ende am Basisbauteil (1) befestigt sind und an ihrem anderen zum Sitzteilträger (4) gerichteten Ende eine radiale Verbreiterung (15) aufweisen, mit der der Sitzteilträger (4) umgreifbar ist, und
dass die elastischen Zwischenelemente an einem oder mehreren in der Grundposition des Sitzteilträgers (4) mit dem Sitzteilträger (4) in Berührung stehenden Bereichen der Fangelemente angeordnet sind, und dass die elastischen Zwischenelemente die Fangbolzen (14) umschließende elastische Hülsen (18) sind, und
dass die elastischen Hülsen (18) an ihren beiden Enden flanschartige Erweiterungen (19) aufweisen, zwischen denen eine Ringnut (20) gebildet ist, in die in der Grundposition des Sitzteilträgers (4) der Sitzteilträger (4) mit seinem umlaufenden Randbereich hineinragt.

2. Fahrzeugsitz nach Anspruch 1, **dadurch gekennzeichnet, dass** der Sitzteilträger (4) plattenartig ausgebildet ist und ein oder mehrere an seinem umlaufenden Rand nach außen mündende Ausnehmungen (16) aufweist, in die in der Grundposition des Sitzteilträgers (4) die an dem Basisbauteil (1) fest angeordneten Fangelemente ragen und den Sitzteilträger (4) an seiner dem Basisbauteil (1) abgewandten Seite umgreifen, wobei die Fangelemente durch Schwenken des Sitzteilträgers (4) aus seiner Grundposition außer Eingriff von den Ausnehmungen (16) des Sitzteilträgers (4) bringbar sind.

3. Fahrzeugsitz nach einem der vorhergehenden Ansprüche, **dadurch gekennzeichnet, dass** die elastischen Zwischenelemente aus einem Elastomer bestehen.

4. Fahrzeugsitz nach einem der vorhergehenden Ansprüche, **dadurch gekennzeichnet, dass** das Basisbauteil (1) plattenartig ausgebildet ist, und dass das plattenartige Basisbauteil (1) mit einem mit dem Boden der Fahrgastzelle verbundenen podestartigen Trägerteil verschraubbar ist.

5. Fahrzeugsitz nach einem der vorhergehenden Ansprüche, **dadurch gekennzeichnet, dass** die Verriegelungseinrichtung einen zweiarmigen Verriegelungshebel (8) aufweist, der um eine zur Schwenkachse (3) parallele Verriegelungsachse (9) schwenkbar am Sitzteilträger (4) gelagert ist, wobei ein erster Arm (10) des Verriegelungshebels (8) einen Vorsprung (11) aufweist, der durch eine vorgespannte Federkraft in eine Ausnehmung am radial umlaufenden Rand einer kreisförmigen Verriegelungsscheibe (6) kraft- und/oder formschlüssig eingreifend belastet ist, die koaxial zur Schwenkachse (3) mit dem Basisbauteil (1) verbunden ist.

## Claims

1. Vehicle seat with a seat part, with a rotating device which has a base component (1) which is fastenable directly or indirectly to the floor of a passenger cell and has a pivot spindle (3) which extends upwards vertically with respect to the plane of the floor and on which a seat part support (4) directly or indirectly supporting the seat part is arranged so as to be pivotable from a basic position, which is directed in the direction of travel (5), into one or more pivoted positions, with a locking device for locking the seat part support (4) in one or more of the pivoted positions, with one or more catch elements which are arranged fixedly on the base component (1) and, in the basic position of the seat part support (4), act in a manner preventing base component (1) and seat part support (4) from moving away from each other in the direction of the pivot spindle (3), **characterized in that**, in the basic position of the seat part support (4), the catch elements act on the seat part support (4) in a form-fitting manner via elastic intermediate elements, and **in that** the catch elements are catch bolts (14) which are fastened with one end thereof to the base component (1) and, at the other end thereof directed towards the seat part support (4), have a radial enlargement (15) usable to engage around the seat part support (4), and **in that**, in the basic position of the seat part support (4), the elastic intermediate elements are arranged on one or more regions of the catch elements that are in contact with the seat part support (4), and **in that** the elastic intermediate elements are elastic sleeves (18) surrounding the catch bolts (14), and **in that** the elastic sleeves (18) at both ends thereof have flangelike expansions (19), between which there is formed an annular groove (20) into which, in the basic position of the seat part support (4), the peripheral border region of the seat part support (4) projects.

2. Vehicle seat according to Claim 1, **characterized in that** the seat part support (4) is of plate-like design and the peripheral border thereof has one or more outwardly opening recesses (16) into which, in the basic position of the seat part support (4), the catch elements, which are arranged fixedly on the base component (1), project and engage around the seat part support (4) on the side thereof which faces away from the base component (1), wherein the catch elements are disengageable from the recesses (16) of the seat part support (4) by pivoting of the seat part support (4) out of the basic position thereof.

3. Vehicle seat according to either of the preceding claims, **characterized in that** the elastic intermediate elements are composed of an elastomer.

4. Vehicle seat according to one of the preceding claims, **characterized in that** the base component (1) is of plate-like design, and **in that** the plate-like base component (1) is screwable to a podium-like support part connected to the floor of the passenger cell.

5. Vehicle seat according to one of the preceding claims, **characterized in that** the locking device has a two-armed locking lever (8) which is mounted on the seat part support (4) so as to be pivotable about a locking axis (9) parallel to the pivot spindle (3), wherein a first arm (10) of the locking lever (8) has a projection (11) which is loaded by means of a pretensioned spring force so as to engage in a frictional and/or form-fitting manner in a recess on the radially peripheral border of a circular locking disc (6) which is connected to the base component (1) coaxially with respect to the pivot spindle (3).

## Revendications

1. Siège de véhicule comprenant une partie de siège, comprenant un dispositif de rotation qui comprend un composant de base (1), pouvant être fixé directement ou indirectement au plancher d'un habitacle et pourvu d'un axe de pivotement (3) s'étendant vers le haut verticalement par rapport au plan du plancher, sur lequel est disposé, de manière à pouvoir pivoter à partir d'une position de base orientée dans la direction de conduite (5) dans une ou plusieurs positions de pivotement, un support de partie de siège (4) supportant directement ou indirectement la partie de siège, comprenant un dispositif de verrouillage pour bloquer le support de partie de siège (4) dans l'une ou plusieurs des positions de pivotement, comprenant un ou plusieurs éléments d'accrochage qui sont disposés fixement sur le composant de base (1) et s'engagent dans la position de base du support de partie de siège (4) en empêchant un déplacement l'un par rapport à l'autre du composant de base (1) et du support de partie de siège (4) dans la direction de l'axe de pivotement (3), **caractérisé en ce que**, dans la position de base du support de partie de siège (4), les éléments d'accrochage s'engagent par coopération de formes avec le support de partie de siège (4) par le biais d'éléments intermédiaires élastiques, et **en ce que** les éléments d'accrochage sont des chevilles d'accrochage (14) qui sont fixées par l'une de leurs extrémités au composant de base (1) et qui comprennent, à leur autre extrémité orientée vers le support de partie de siège (4), un élargissement radial (15) qui peut venir en prise autour du support de partie de siège (4), et **en ce que** les éléments intermédiaires élastiques sont disposés sur une ou plusieurs régions des éléments d'accrochage qui sont en contact avec le support de partie de siège (4) dans la position de base du support de partie de siège (4), et
**en ce que** les éléments intermédiaires élastiques sont des douilles élastiques (18) entourant les chevilles d'accrochage (14), et
**en ce que** les douilles élastiques (18) comprennent à leurs deux extrémités des prolongements (19) de type collet entre lesquels est formée un rainure annulaire (20) dans laquelle pénètre le support de partie de siège (4) par sa région de bord périphérique dans la position de base du support de partie de siège (4).

2. Siège de véhicule selon la revendication 1, **caractérisé en ce que** le support de partie de siège (4) est réalisé en forme de plaque et comprend un ou plusieurs évidements (16) débouchant vers l'extérieur sur son bord périphérique, dans lesquels, dans la position de base du support de partie de siège (4), les éléments d'accrochage disposés fixement sur le composant de base (1) font saillie et viennent en prise autour du support de partie de siège (4) sur son côté opposé au composant de base (1), les éléments d'accrochage pouvant être, par pivotement du support de partie de siège (4) à partir de sa position de base, amenés à se désengager des évidements (16) du support de partie de siège (4).

3. Siège de véhicule selon l'une quelconque des revendications précédentes, **caractérisé en ce que** les éléments intermédiaires élastiques sont constitués d'un élastomère.

4. Siège de véhicule selon l'une quelconque des revendications précédentes, **caractérisé en ce que** le composant de base (1) est réalisé en forme de plaque, et **en ce que** le composant de base en forme de plaque (1) peut être vissé sur une partie de support de type socle reliée au plancher de l'habitacle.

5. Siège de véhicule selon l'une quelconque des revendications précédentes, **caractérisé en ce que** le dispositif de verrouillage comprend un levier de verrouillage à deux bras (8) qui est monté sur le support de partie de siège (4) de manière à pouvoir pivoter autour d'un axe de verrouillage (9) parallèle à l'axe de pivotement (3), un premier bras (10) du levier de verrouillage (8) comprenant une saillie (11) qui est sollicitée par une force de ressort précontraint, de manière à s'engager par force et/ou par coopération de formes dans un évidement sur le bord radialement périphérique d'un disque de verrouillage circulaire (6), lequel disque de verrouillage est relié au composant de base (1) de manière coaxiale à l'axe de pivotement (3).
